(19)

Europäisches
Patentamt
European
Patent Office
Office européen
des brevets

(11) **EP 3 561 461 A1**

(12) **EUROPEAN PATENT APPLICATION**

(43) Date of publication:
**30.10.2019 Bulletin 2019/44**

(51) Int Cl.:
***G01G 19/00*** *(2006.01)*

(21) Application number: **18169688.1**

(22) Date of filing: **27.04.2018**

<table>
<tr>
<td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Withings**
**92130 Issy-les-Moulineaux (FR)**

</td>
<td>

(72) Inventors:
• OUESLATI, Ianis
**92173 Vanves (FR)**
• CAMPO, David
**92130 Issy-Les-Moulineaux (FR)**

(74) Representative: **Cabinet Plasseraud**
**66, rue de la Chaussée d'Antin**
**75440 Paris Cedex 09 (FR)**

</td>
</tr>
</table>

(54) **WEIGHING A FILTER**

(57) Examples of the disclosure relate to an apparatus and a method of controlling the apparatus. The apparatus may comprise means for receiving a filter, weighing the filter, and moving the filter between a first position within the apparatus and a second position within the apparatus. The first position may enable calibration of the means for weighing the filter and the second position may enable weighing of the filter by the means for weighing the filter. A system may comprise means for determining a mass of particulate matter captured by the filter over a first period of time.

EP 3 561 461 A1

**Description**

TECHNOLOGICAL FIELD

Embodiments of the present disclosure relate to weighing a filter. For example, some embodiments relate to an apparatus, others to a method and others to a system for causing the weighing of a filter.

BACKGROUND

Filters remove matter from fluids that are passed through the filter. The amount of matter removed by a filter can be determined. It may be desirable to determine the amount of matter removed by a filter in order to determine properties about the filter such as its present level of saturation or properties about the fluid such as the density of matter suspended in the fluid.

BRIEF SUMMARY

According to various, but not necessarily all, embodiments there is provided an apparatus comprising means for: receiving a filter; weighing the filter; and moving the filter between a first position within the apparatus and a second position within the apparatus. The first position enables calibration of the means for weighing the filter and the second position enables weighing of the filter by the means for weighing the filter.

In at least some examples, the means for weighing the filter is configured to bear the weight of the filter when the filter is in the first second position.

In at least some examples, the means for moving the filter is configured to bear the weight of the filter when the filter is in the second first position such that a zero point for the means for weighing the filter can be established.

In at least some examples, the means for moving the filter comprises a filter abutment surface. The means for moving the filter may be configured to raise the filter abutment surface from a position below the means for weighing the filter to a position above the means for weighing the filter to lift the filter off the means for weighing the filter. The means for moving the filter may be configured to lower the filter abutment surface from a position above the means for weighing the filter to a position below the means for weighing the filter to deposit the filter on the means for weighing the filter.

In at least some examples, the means for moving the filter comprises means for raising and lowering a first member with respect to a second member. The first member may provide, on its upper surface, the filter abutment surface.

In at least some examples, the means for raising and lowering a first member with respect to a second member comprises means for converting rotational movement between first and second members about a vertical axis into axial movement between first and second members.

In at least some examples, at least one bearing is disposed between opposing surfaces of the first and second members and at least one of the opposing surfaces has a guiding profile for the at least one bearing. The guiding profile may comprise at least one inclined portion, and the at least one bearing is in rolling contact with the guiding surface.

In at least some examples, the means for raising and lowering a first member with respect to a second member is configured such that rotation of the first member with respect to the second member about the vertical axis causes the at least one bearing to move along the at least one inclined portion of the guiding profile so as to cause axial movement between the first and second parts such that the first member is raised or lowered with respect to the second member.

In at least some examples, the means for moving the filter is configured to position the filter in sealing contact with a housing of the apparatus when the filter is in the first position such that substantially all airflow paths between an at least one intake opening in the housing and an at least one exhaust opening in the housing pass through the filter.

In at least some examples, the means are further configured to produce an output indicative of pressure on an intake side of the filter and to produce an output indicative of pressure on an exhaust side of the filter.

In at least some examples, the means are further configured to drive air through the filter.

In at least some examples, the means are further configured to produce an output indicative of the power consumed by the means for driving air through the filter.

In at least some examples, the apparatus is an air purifier configured to reduce the density of particulate matter suspended in air that passes through the filter.

In at least some examples, the filter is configured to trap particulate matter.

According to various, but not necessarily all, embodiments there is provided an apparatus configured to receive a filter, the apparatus comprising: a load sensor configured to weigh the filter; and an actuator configured to move the filter between a first position within the apparatus and a second position within the apparatus. The first position enables calibration of the load sensor and the second position enables weighing of the filter by the load sensor.

In at least some examples, the load sensor is configured to bear the weight of the filter when the filter is in the first position.

In at least some examples, the actuator is configured to bear the weight of the filter when the filter is in the second position such that a zero point for the load sensor can be established

In at least some examples, the actuator comprises a filter abutment surface. The actuator may be configured to raise the filter abutment surface from a position below the load sensor to a position above the load sensor to lift the filter off the load sensor. The actuator may be configured to lower the filter abutment surface from a position above the load sensor to a position below the load sensor to deposit the filter on the load sensor.

In at least some examples, the actuator comprises a jack supporting the filter abutment surface.

In at least some examples, the jack is configured to convert a rotary input into a linear output.

In at least some examples, the jack comprises a pair of opposing surfaces, at least one of which has a guiding profile comprising at least one inclined portion. The jack may comprise at least one bearing disposed between the pair of opposing surfaces in rolling contact with the guiding profile.

In at least some examples, the jack is configured such that a rotary input causes the at least one bearing to move along the at least one inclined portion of the guiding profile so as to provide a linear output.

In at least some examples, the actuator is configured to position the filter in sealing contact with a housing of the apparatus when the filter is in the first position such that all substantially air flow paths between an at least one intake opening in the housing and an at least one exhaust opening in the housing pass through the filter.

In at least some examples, the apparatus comprises a filter-intake-side pressure sensor a filter-exhaust-side pressure sensor.

In at least some examples, the apparatus comprises a fan configured to drive air through the filter.

In at least some examples, the apparatus comprises an electrical power sensor for the fan.

According to various, but not necessarily all, embodiments there is provided a method comprising: weighing a filter within an apparatus; and moving the filter between a first position within the apparatus and a second position within the apparatus. The first position enables calibration of means for weighing the filter and the second position enables weighing of the filter by the means for weighing the filter.

In at least some examples, the method comprises obtaining an output from the means for weighing the filter while the filter is in the first position substantially immediately before moving the filter to the second position to enable weighing of the filter by the means for weighing the filter.

In at least some examples, the method comprises repeating weighing of the filter after a first period of time such that a change in the weight of the filter during the first period of time can be determined for use in determining the density of particulate matter suspended in air that passed through the filter during the first period of time.

According to various, but not necessarily all, embodiments there is provided a method comprising: weighing the filter using a load sensor within the apparatus; and moving the filter between a first position within the apparatus and a second position within the apparatus. The first position enables calibration of the load sensor and the second position enables weighing of the filter by the load sensor.

In at least some examples, the method comprises obtaining an output from the load sensor the filter while the filter is in the first position substantially immediately before moving the filter to the second position to enable weighing of the filter by the load sensor.

In at least some examples, the method comprises repeating weighing of the filter after a first period of time such that a change in the weight of the filter during the first period of time can be determined for use in determining the density of particulate matter suspended in air that passed through the filter during the first period of time.

According to various, but not necessarily all, embodiments there is provided a system comprising means for: transmitting at least one signal to an apparatus to cause weighing of a filter within the apparatus; receiving at least one signal from the apparatus indicative of the weight of the filter; transmitting at least one signal to an apparatus to cause movement of the filter between a first position within the apparatus and a second position within the apparatus, wherein the first position enables calibration of means for weighing the filter and the second position enables weighing of the filter by the means for weighing the filter; and determining a mass of particulate matter captured by the filter over a first period of time based, at least in part, on the at least one signal from the apparatus indicative of the weight of the filter.

In at least some examples, the first period of time is the time since the filter was received within the apparatus.

In at least some examples, the first period of time is the time between two weighing events.

In at least some examples, the means are further configured to determine a density of particulate matter suspended in air that passed through the filter during a first period of time based, at least in part, on the mass of particulate matter captured by the filter over a first period of time.

According to various, but not necessarily all, embodiments there is provided a system comprising: at least one transceiver; at least one processor; and at least one memory including computer program code. The at least one transceiver is configured to: transmit at least one signal to an apparatus to cause weighing of a filter within the apparatus; receive at least one signal from the apparatus indicative of the weight of the filter; and transmit at least one signal to an apparatus to cause movement of the filter between a first position within the apparatus and a second position within the apparatus The first position enables calibration of a load sensor and the second position enables weighing of the filter by the load sensor. The at least one memory and the computer program code is configured to, with the at least one processor, cause the system at least to perform determining a mass of particulate matter captured by the filter over a first period of time based, at least in part, on the at least one signal from the apparatus indicative of the weight of the filter.

In at least some examples, the first period of time is the time since the filter was received within the apparatus.

In at least some examples, the first period of time is the time between two weighing events.

In at least some examples, at least one memory and the computer program code is configured to, with the at least one processor, cause the system at least to perform determining a density of particulate matter suspended in air that passed through the filter during a first period of time based, at least in part, on the mass of particulate matter captured by the filter over a first period of time.

According to various, but not necessarily all, embodiments there is provided a computer program or a non-transitory computer readable medium or a computer product or a machine readable medium, any of which comprise program instructions for causing a system to perform at least the following: transmitting at least one signal to an apparatus to cause weighing of a filter within the apparatus; receiving at least one signal from the apparatus indicative of the weight of the filter; transmitting at least one signal to an apparatus to cause movement of the filter between a first position within the apparatus and a second position within the apparatus, wherein the first position enables calibration of means for weighing the filter and the second position enables weighing of the filter by the means for weighing the filter; and determining a mass of particulate matter captured by the filter over a first period of time based, at least in part, on the at least one signal from the apparatus indicative of the weight of the filter.

According to various, but not necessarily all, embodiments there is provided examples as claimed in the appended claims.

BRIEF DESCRIPTION

Some example embodiments will now be described with reference to the accompanying drawings in which:

FIG. 1 shows an example embodiment of the subject matter described herein;
FIG. 2 shows another example embodiment of the subject matter described herein;
FIGs. 3A and 3B show another example embodiment of the subject matter described herein;
FIGs. 4A, 4B, 4C, and 4D show another example embodiment of the subject matter described herein;
FIGs. 5A and 5B show another example embodiment of the subject matter described herein;
FIG. 6 shows another example embodiment of the subject matter described herein;
FIG. 7 shows another example embodiment of the subject matter described herein;
FIG. 8 shows another example embodiment of the subject matter described herein; and
FIG. 9 shows another example embodiment of the subject matter described herein.

DETAILED DESCRIPTION

The FIGs. illustrate an apparatus 1 and method 100 for weighing a filter 10 in-situ. Weighing the filter 10 in-situ refers to weighing the filter 10 without having to remove it from the apparatus 1. For example, the apparatus 1 could be configured to receive the filter 10 within the apparatus 1 and the apparatus 1 comprises means 6 for weighing the filter 10 while the filter 10 is retained within the apparatus 1. The apparatus 1 can also comprise means for enabling the calibration of the weighing means 6. In some examples, this comprises a means 4 for moving the filter 10 between at least two different positions within the apparatus 1. By moving the filter 10 between at least two different positions within the apparatus 1, calibration of the weighing means 6 is enabled and the weight of the filter 10 can be more accurately determined. By moving the filter 10 between at least two different positions within the apparatus 1, the weighing means 6 may be calibrated just prior to or just after a weighing event so that the weight of the filter 10 can be more accurately determined from that weighing event. In some examples, the calibration of the weighing means 6 may be performed while the filter 10 is in an operational position.

Examples of the disclosure therefore enable the weight of a filter 10 to be accurately determined without removing the filter 10 from the apparatus 1. Such information can be used to indicate when the filter 10 has become saturated and needs to be replaced or cleaned, as the case may be. In some examples, the filter 10 is separate to and removable from the apparatus 1. The filter 10 is replaceable. The apparatus 1 can be re-used with new filters.

The apparatus 1 may be used with a filter 10 configured to trap particulate matter, for example particulate matter suspended in air that passes through the filter 10. Particulate material comprises airborne microscopic solid or liquid matter such as organic contaminants, biological contaminants (e.g., allergens and bacteria), dust, soot, smog, and other matter contributing to air pollution.

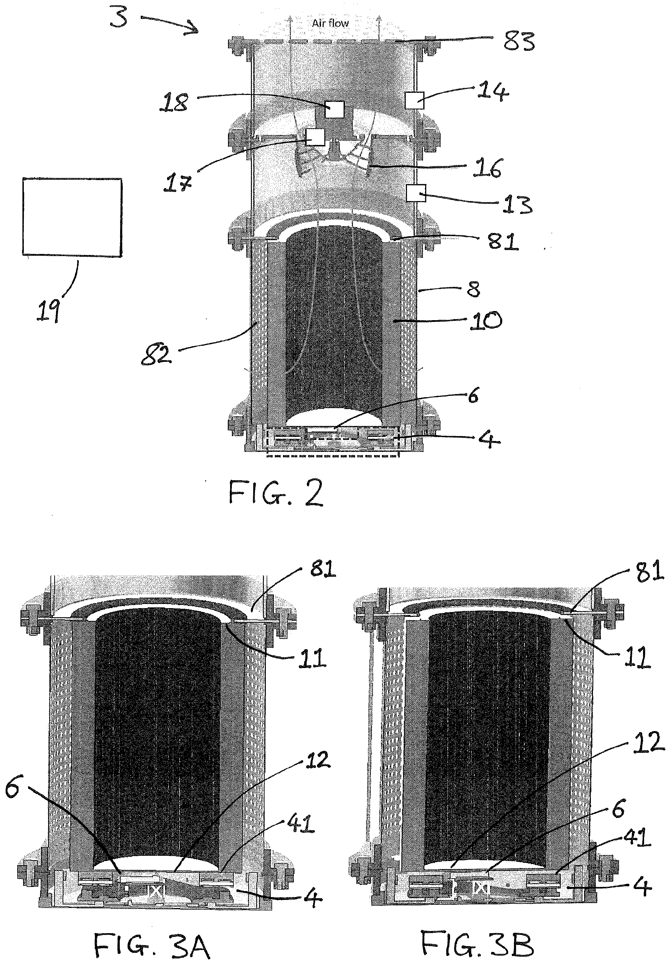

In some examples, the filter 10 is a depth filter configured to capture particulate matter within its structure. In other examples the filter 10 is a membrane filter (otherwise known as surface filters) configured to capture particles on the addressed surface of the membrane. In some examples the filter 10 comprises a mat of randomly arranged fibres arranged to trap particulate matter suspended in the air which passes through the filter 10. In some examples, the mat of randomly arranged fibres is formed into a shell having a hollow core into which filtered air passes. For example, the mat of randomly arranged fibres may be formed as a hollow cylinder as shown in FIG. 2. In other examples, the mat of randomly arranged fibres may be formed into a flat sheet. The filter 10 may be a high efficiency particulate air (HEPA) filter. The filter 10 may remove (from the air that passes through) 99.97% of particles that have a size of 0.3 $\mu$m. A greater percentage of particles having sizes larger or smaller than 0.3 $\mu$m may be removed from air passing though the filter 10.

The change in weight of filter 10 over time can be used in a determination of air quality, for example in a determination of the density of particulate matter suspended in the air. By using the changing weight of the filter 10 in the determination of air quality, the result is not affected by changes in the composition of particulate matter in the air over time. Because the total weight of the particulate matter trapped by the filter 10 is obtained, any particulate matter that has been trapped by the filter 10 will be accounted for in the determination of air quality. This includes sub-micron particulate matter which can be the most abundant and the most detrimental to health because they penetrate more deeply into the lungs, and the smallest ones penetrate into the bloodstream.

Thus, by accurately determining weight of the filter 10, the total weight of particulate matter accumulated by the filter 10 over a period of time can be accurately determined and used to produce an accurate determination of air quality for comparison with exposure limits in official air quality guidelines.

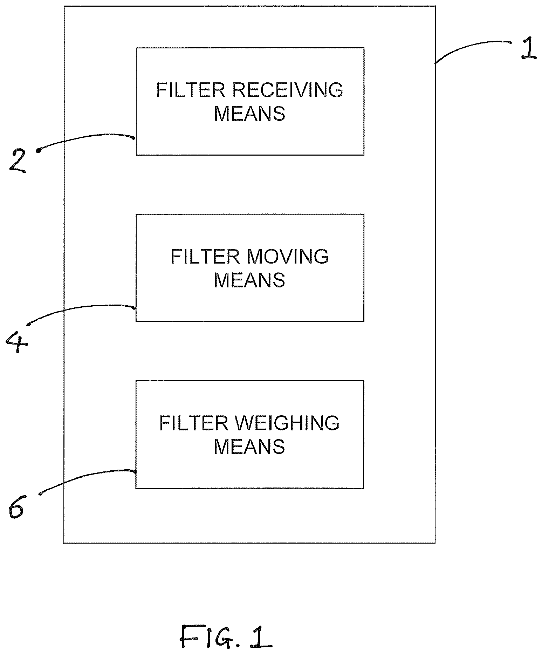

FIG. 1 schematically illustrates an apparatus 1 according to examples of the disclosure. The apparatus 1 could be an air purifier configured to reduce the density of particulate matter suspended in air that passes through a filter 10 of the air purifier 3 as shown in FIG. 2 or could be comprised in an air purifier 3. The apparatus 1 could also be implemented in any system which performs filtering. For example, the apparatus 1 could be used in the exhaust system of a vehicle to accurately determine the weight of a particle filter (e.g., a diesel particle filter) and thus determine when soot loading has reached a threshold at which active or forced regeneration to burn off the accumulated soot should be implemented.

As illustrated in FIG. 1, the apparatus 1 comprises means 2, 4, 6 for: receiving a filter 10; weighing the filter 10; and moving the filter 10 between a first position within the apparatus 1 and a second position within the apparatus 1, wherein the first position enables calibration of the means 6 for weighing the filter 10 and the second position enables weighing of the filter 10 by the means 6 for weighing the filter 10.

In some examples, the means 2 for receiving the filter 10 may comprise a housing 8 (as shown in FIG. 2) of the apparatus 1, sized to receive the filter 10 within the apparatus 1. The housing 8 may be configured to at least partially enclose the filter 10 so that the filter 10 is at least partially contained within the apparatus 1. In some examples, the housing 8 may be modular, enabling disassembly and reassembly, to enable the filter 10 to be received by and removed from the apparatus 1. When assembled the housing 8 may be configured to retain the filter 10 within the apparatus 1.

In some examples, the means 2 for receiving the filter 10 may comprise one or more supports within the apparatus 1 which are configured to provide stability to the filter 10. For example, the supports may prevent the filter 10 from tipping over inside the apparatus 1. The supports may be integrated with one or both of the means 6 for weighing the filter 10 and means 4 for moving the filter 10. The supports may in some examples be integrated with a housing 8 of the apparatus 1.

The means 6 for weighing the filter 10 may be any suitable means for performing the function of producing an output indicative of the weight of the filter 10. In some example, the means 6 for weighing the filter 10 is a weighing means suitable for producing an output indicative of the weight of any object having mass and experiencing gravity. In some example, the means 6 for weighing the filter 10 comprises a load sensor such as a load cell (e.g., a piezoelectric load cell, hydraulic load cell, pneumatic load cell, etc.) or a strain gauge.

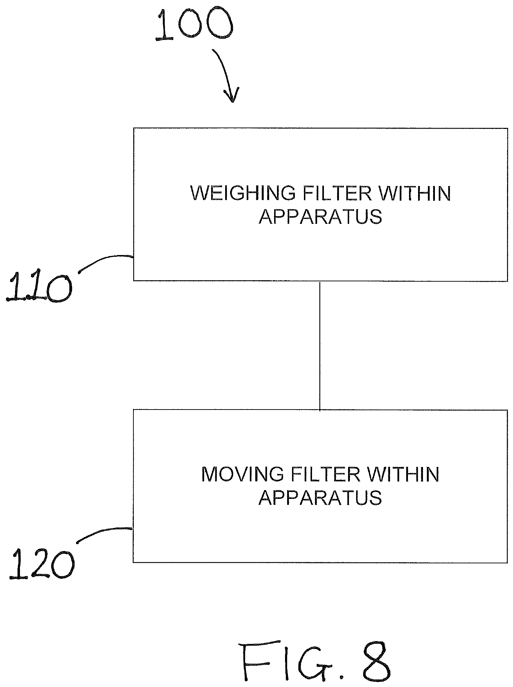

In some examples, the output may be transmitted towards to a controller 19, 202 (as shown in FIGs. 2 and 8).

In some examples, the means 6 for weighing the filter 10 is configured to support the filter 10 in the second position. The means 6 for weighing the filter 10 is configured to bear the weight of the filter 10 when the filter 10 is in the second position. In some examples, the means 6 for weighing the filter 10 is configured to substantially fully bear the weight of the filter 10 when the filter 10 is in the second position. In some examples, the means 6 for weighing the filter 10 is configured to fully bear the weight of the filter 10 when the filter 10 is in the second position.

In some examples, the means 4 for moving the filter 10 is configured to support the filter 10 in the first position. The means 4 for moving the filter 10 is configured to bear the weight of the filter 10 when the filter 10 is in the first position. The means 4 for moving the filter 10 is configured to bear the weight of the filter 10 when the filter 10 is in the first position such that a zero point or tare weight for the means 6 for weighing the filter 10 can be established. In some examples, the means 4 for moving the filter 10 is configured to substantially fully bear the weight of the filter 10 when the filter 10 is in the first position so that the means 6 for weighing the filter 10 bears substantially none of the filter's weight. In some examples, the means 4 for moving the filter 10 is configured to fully bear the weight of the filter 10 when the filter 10 is in the first position so that the means 6 for weighing the filter 10 bears none of the filter's weight.

In some examples, the means 6 for weighing the filter 10 could be, to some extent, temperature dependent. Since the ambient temperature may change over time, the means 6 for weighing the filter 10 may not be optimally calibrated during a weighing event. Thus, the weight obtained for that weighing event may lack accuracy. Establishing a zero point for the means 6 for weighing the filter 10, as per examples of the disclosure, enables calibration of the means 6 for weighing the filter 10 at a current temperature. By establishing a zero point before a weighing event, the means 6 for weighing the filter 10 may be calibrated for the temperature at which the weighing event will occur and thus the accuracy of the weight obtained during that weighing event is improved.

In some example, the means 4 for moving the filter 10 comprises at least one actuator configured to cause movement of the filter 10. In some examples, at least one actuator comprises a lifting device such as a jack, a hoist, a screw, etc. configured to raise the filter 10 so that it is lifted off of the means 6 for weighing the filter 10 and to lower the filter 10 so that its weight is, at least in part, borne by the means 6 for weighing the filter 10. In other examples, at least one actuator may be configured to move the filter 10 horizontally off of the means 6 for weighing the filter 10.

In some examples, the means 4 for moving the filter 10 may also cause the movement of the means 6 for weighing the filter 10. The filter 10 may be suspended within the apparatus 1 and the means 6 for weighing the filter 10 may be raised in order to lift the filter 10 such that the whole of the weight of the filter 10 is borne by the means 6 for weighing the filter 10.

FIG. 2 schematically illustrates an example of an air purifier 3. In some, but not necessarily all, examples the apparatus 1 is an air purifier 3. In other examples the apparatus 1 is a part of the air purifier 3 such as a module of the air purifier 3.

In the example illustrated in FIG. 2, the apparatus 1 comprises the means 6 for weighing the filter 10 and means 4 for moving the filter 10 as described in relation to FIG. 1. The means 4 for moving the filter 10 is configured to lift the filter 10 from a first position to a second position by exerting a force acting from below the filter 10. In this example, the means 4 for moving the filter 10 is a jack configured to lift the filter 10 from a first position to a second position by exerting a force acting from below the filter 10. More detail on this means 4 for moving the filter 10 is provided in relation to FIG. 3A and 3B as described below. It is to be appreciated that although not illustrated in FIG. 2, other means 4 for moving the filter 10, as described in relation to FIG. 1, could be used.

As illustrated in FIG. 2, a filter 10 is received within the apparatus 1 and is contained within the apparatus 1. The filter 10 may be partially contained within the apparatus 1. The filter 10 may be fully contained within the apparatus 1. In some examples, the filter 10 is received within a housing 8 of the apparatus 1. The housing 8 of the apparatus 1 can comprise at least one intake opening 82 and at least one exhaust opening 83 and in such examples the apparatus 1 is configured to receive the filter 10 in a range of positions between the at least one intake opening 82 and the at least one exhaust opening 83. In some examples a plurality of intake and/or exhaust opening 83 are provided in the housing 8 and the apparatus 1 is configured to receive the filter 10 in a range of positions between the intake opening(s) 82 and exhaust opening(s) 83. In some examples, the plurality of intake openings 82 provide a grille in the housing 8. In some examples, the plurality of exhaust openings 83 provide a grille in the housing 8. In some examples, the housing 8 of the apparatus 1 forms the housing 8 of an air purifier 3.

In some examples, such as the example illustrated in FIG. 2, the means 4 for moving the filter 10 is configured to position the filter 10 in sealing contact with a housing 8 of the apparatus 1, when the filter 10 is in the first position, such that the majority of airflow paths between the at least one intake opening 82 in the housing 8 and the at least one exhaust opening 83 in the housing 8 pass through the filter 10. In some examples substantially all airflow paths between the at least one intake opening 82 in the housing 8 and the at least one exhaust opening 83 in the housing 8 pass through the filter 10. In some examples all airflow paths between the at least one intake opening 82 in the housing 8 and the at least one exhaust opening 83 in the housing 8 pass through the filter 10. In this latter case, when the filter 10 is in the first position, there is no air flow path through the apparatus 1, within the housing 8, between the at least one intake opening 82 in the housing 8 and the at least one exhaust opening 83 in the housing 8, that does not pass through the filter 10.

A projection 81 from the internal wall(s) of the housing 8 of the apparatus 1, such as an O-ring, can provide a sealing interface for the filter 10. The projection 81 may be integral with the housing 8. The projection 81 may be substantially rigid. The projection 81 may be sufficiently rigid so as to not deform under the contact forces exerted by the filter 10 when the filter 10 is pressed against the projection 81 so as to form a seal. The means 4 for moving the filter 10 may be configured to press the filter 10 against the projection 81 when the filter 10 is in the first position so as to form a seal, for example an air-tight seal. The contact force exerted on the filter 10 in this first position can make it difficult to produce an output indicative of the weight of the filter 10 as these contact forces will also bear down on the means 6 for weighing the filter 10.

In some examples, the means 4 for moving the filter 10 is configured to position the filter 10 out of sealing contact with a housing 8 of the apparatus 1 when the filter 10 is in the second position. The filter 10 can be weighed without contact forces, arising from the sealing contact between the filter 10 and the housing 8, bearing down on the means 6 for weighing the filter 10. The means 6 for weighing the filter 10 may be simple in design or simple to integrate into the apparatus 1 because it does not need to be designed or integrated into the apparatus 1 in a manner which enables these contact forces to be accounted for when producing an output indicative of the weight of the filter 10.

In some examples, the means 4 for moving the filter 10 is configured to move the filter 10 so that only the weight of the filter 10 bears down upon the means 6 for weighing the filter 10 when the filter 10 is in the second position. In some examples a tare weight may also bear down on the means 6 for weighing the filter 10 but this is accounted for by calibration. Since only the filter 10 is weighted, the precision of the weighing means can be reduced as compared to the situation where the weighing means is required to weigh the filter 10 along with other elements of the apparatus 1. Less precise weighing means are typically less expensive and may be smaller making them easier to integrate into the apparatus 1.

By way of an example, if $10^4$ m$^3$ of air containing 10 μg/m$^3$ of particulate matter passes through a filter 10 in a day, the total mass of particulate matter captured within a day is 0.1 g. If the apparatus 1 has a mass on the order of 1 kg and a filter 10 has a mass on the order of 100 g then a means 6 for weighing the filter 10 only needs to produce an output with a precision to parts per thousand if only the filter 10 is weighed. In contrast, if the whole air purifier 3 is weighed, more precision is required in order to measure the mass variations over a day.

In some examples, a permanent seal may be formed as between the filter 10 and the housing 8. The seal may be provided by an impermeable, flexible membrane which enables movement of the filter 10 between the first and second positions whilst maintaining the seal.

In some examples, the apparatus 1 comprises means 16 for driving air through the filter 10. The means 16 for driving air through the filter 10 may comprise a fan or any other means which produces a current of air, whether mechanically or thermally induced, which passes through the filter 10. In some examples a magnetohydrodynamic propulsion system may be used in which the air may be ionized and driven through the filter 10 by an electric field. The fan may be positioned on an intake-side of the filter 10 or on the exhaust-side of the filter 10 and its design adapted in either case so as to cause the air to pass from the at least one intake opening 82 in the housing 8 to the at least one exhaust opening 83 in the housing 8.

In some example, the apparatus 1 comprises means 17 for producing an output indicative of the rotational speed of the fan 16. For example, the rotational speed of the fan 16 may be measured by a tachometer, either contact based or contact-less such as an optical tachometer.

In some examples, the apparatus 1 comprises means 18 for producing an output indicative of the power consumed by the means 16 for driving air through the filter 10, such as the fan. Such means may comprise a wattmeter or an ammeter and a voltmeter.

In some examples, the apparatus 1 comprises means 13 for producing an output indicative of pressure on the intake-side of the filter 10 and means 14 for producing an output indicative of pressure on an exhaust-side of the filter 10. Such means may comprise a pressure sensor.

The outputs indicative of the rotational speed of the fan 16, the power consumed by the means 16 for driving air through the filter 10, such as the fan, and the pressure on the intake- and exhaust-sides of the filter 10 may be used in order to determine the airflow rate through the filter 10 as described in more detail in relation to FIG. 8.

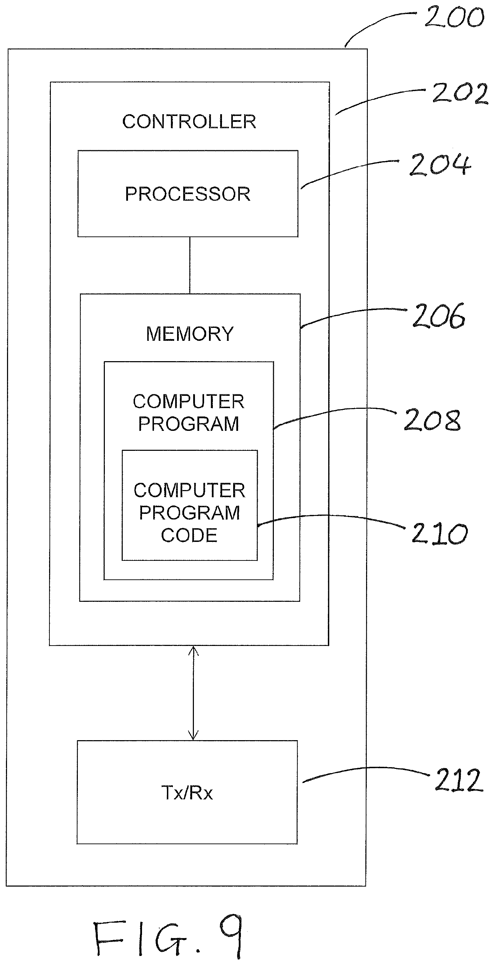

These outputs may be transmitted towards the controller 19. The controller 19 may be a controller which is comprised in the apparatus 1 and/or in the air purifier 3. In some examples, the controller may be interconnected with the means 6 for weighing the filter 10 by a physical galvanic connection. In other examples, the controller 19 may be a controller remote from the apparatus 1 such as controller 202 (as shown in FIG. 9).

FIGs. 3A and 3B schematically illustrates an apparatus 1 according to examples of the disclosure. FIG. 3A illustrates an example of the apparatus 1 when the filter 10 is in the first position and FIG. 3B illustrates an example of the apparatus 1 when the filter 10 is in the second position.

In the example of FIGs. 3A and 3B, the means 4 for moving the filter 10 comprises a filter abutment surface 41. The means 4 for moving the filter 10 is configured to raise and lower the filter abutment surface 41. In some examples, the filter abutment surface 41 abuts against the lower end 12 of the filter 10. The filter 10 can be moved into the first position by raising the filter abutment surface 41 above the means 6 for weighing the filter 10. The filter 10 can be moved into the second position by lowering the filter abutment surface 41 to the level of or below the level of the means 6 for weighing the filter 10. The means 4 for moving the filter 10 causes the filter 10 to be lifted off the means 6 for weighing the filter 10 when the filter abutment surface 41 is raised from a position below the means 6 for weighing the filter 10 to a position above the means 6 for weighing the filter 10. In so doing, the filter 10 is moved into the first position within the apparatus 1. The means 4 for moving the filter 10 causes the filter 10 to be lowered onto the means 6 for weighing the filter 10 when the filter abutment surface 41 is lowered from a position above the means 6 for weighing the filter 10 to a position below the means 6 for weighing the filter 10. In so doing, the filter 10 is deposited onto the means 6 for weighing the filter 10. The filter 10 is therefore moved into the second position within the apparatus 1. In some examples the filter abutment surface 41 does not remain in contact with the lower end 12 of the filter 10 when the filter 10 is in the second position within the apparatus 1.

In both FIGs. 3A and 3B the means 4 for moving the filter 10 comprises a jack configured to lift the filter 10 from a first position to a second position by exerting a force acting from below the filter 10. The jack supports the filter abutment surface 41.

FIG. 3A illustrates an example of the disclosure wherein the filter 10 is in the first position. In this example the filter 10 is raised above the level of the means 6 for weighing the filter 10 by the jack and is pressed against a projection 81 from the internal walls of the housing 8 of an air purifier 3 as illustrated in FIG. 2 to form a seal.

FIG. 3B illustrates an example of the disclosure wherein the filter 10 is in the second position. In this example the filter 10 is supported by the means 6 for weighing the filter 10 and not by the filter abutment surface 41. A gap is provided between the upper end 11 of the filter 10 and the projection 81 from the internal walls of the housing 8 of the air purifier 3. Thus, air can bypass the filter 10, via this gap, when flowing between the intake opening 82 and exhaust opening 83.

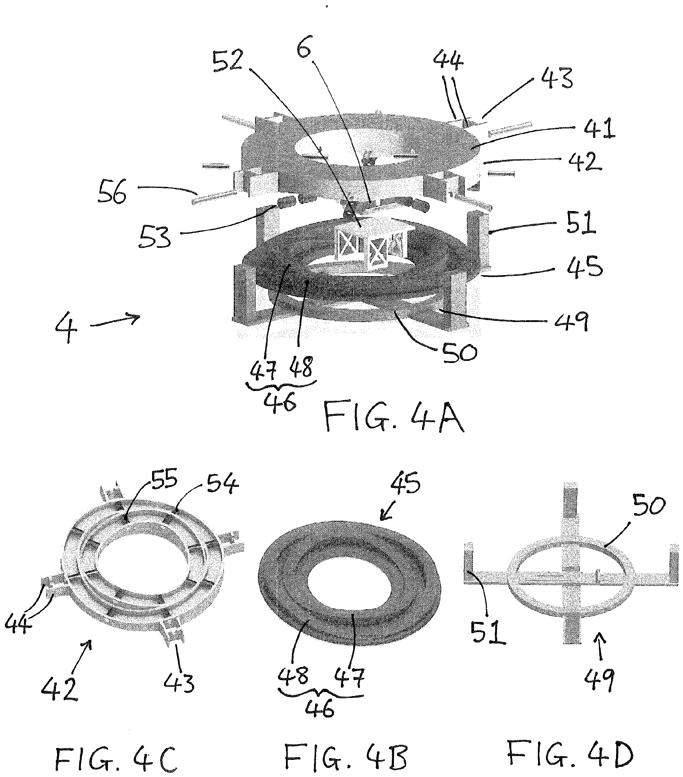

FIG. 4A, 4B, 4C, and 4D schematically illustrate a means 4 for moving the filter 10 (or another object) according to examples of the disclosure. In examples according to these FIGs. The means 4 may be an actuator configured to convert rotary input motion into linear output motion such as, for example, a rotary-linear actuator. The rotary-linear actuator may be a jack configured to convert a rotary input into a lifting output.

FIG. 4A illustrates an exploded view of an example of the means 4 for moving the filter 10 comprising a first member 42, a second member 45, and a third member 49. The first, second, and third members 42, 45, 49 are components of the means 4 for moving the filter 10. In some examples, these components may be produced using molds or by three-dimensional printing methods. Other manufacturing methods may be used to produce the first, second, and third members 42, 45, 49. In some examples, the first and second members 42, 45 are substantially ring shaped. The first and second members 42, 45 are configured to circumscribe a central space in which the means 6 for weighing the filter 10 may be disposed.

In some examples, the first member 42 provides, on its upper surface, the filter abutment surface 41. The second member 45 is rotatable relative to the first member 42. In some examples, rotating the second member 45 relative to the first member 42 causes variation in the average separation between the opposing surfaces of the first and second members 42, 45 (i.e., the lower surface of the first member 42 and the upper surface of the second member 45). Rotational movement between first and second members 42, 45 about a vertical axis is converted into axial movement between first and second members 42, 45. As such, the filter abutment surface 41 can be raised or lowered by rotating the second member 45 relative to the first member 42.

In some examples at least one bearing 53 is disposed between opposing surfaces of the first and second members 42, 45. The bearing 53 reduces friction between the first and second member 45 and thus less force is required to rotate one with respect to the other. Less force is therefore required to raise the filter abutment surface 41 and so less force is required to raise the filter 10. In some examples a plurality of bearings 53 are distributed between the opposing surfaces of the first and second members 42, 45. The use of a plurality of bearings 53 increases stability and reduces wear on an individual bearing 53. In the illustrated example, roller bearings are used. In the exploded view the rollers and the shafts 56 about which they rotate can be seen.

In some examples, at least one of the opposing surfaces of the first and second members 42, 45 has a guiding profile 46 for the at least one bearing 53, wherein the guiding profile 46 comprises at least one inclined portion, and the at least one bearing 53 is in rolling contact with the guiding surface. Rotation of the first member 42 with respect to the second member 45 causes the bearing 53 to move along the inclined portion of the guiding profile 46 so as to cause movement along the axis of rotation between the first and second members 42, 45 such that the first member 42 is raised or lowered with respect to the second member 45. In some examples, the guiding profile 46 comprises multiple inclined portions.

In some examples, the guiding profile 46 may be smooth so as to facilitate smooth raising and lowering of the filter 10. The means for means 4 for moving the filter 10 can also remain more stably in the configuration in which there is maximum separation between the opposing surfaces of the first and second members 42, 45. In some examples, the height of the guiding profile 46 may be described by a function of the angle about the axis of rotation. By smooth it is means that this function is continuously differentiable. The guiding profile 46 may be, for example, substantially sinusoidal.

In the illustrated example, the upper surface of the second member 45 comprises a guiding profile 46. The guiding profile 46 is described in more detail with reference to FIG. 4B below. In some examples, the lower surface of the first member 42 may additionally or alternatively comprise a guiding profile 46. In some examples the bearings 53 may be fixed to the one of the first or second members in an arrangement conforming to the guiding profile 46 of the other of the first or second members 42, 45.

FIG. 4B illustrates an example of the second member 45 as shown in FIG. 4A. In the illustrated example the guiding profile 46 comprises an inner profile 47 and an outer profile 48. In some examples, the inner profile 47 and outer profile 48 are equivalent in shape but are angularly offset about the axis of rotation. In some examples the inner and outer profiles 47, 48 are out of phase. For example, the maxima of the inner profile 47 occur at the same angular position as the minima of the outer profile 48. In the example of FIG. 4B, the inner and outer profiles 47, 48 both have two maxima. As a result, the inner and outer profiles 47, 48 are offset by 90 degrees so that the maxima of one coincide with the minima of the other.

FIG. 4C illustrates an example of the first member 42 as shown in FIG. 4A. In the illustrated example an inner set of bearings 54 and an outer set of bearings 55 are mounted on the lower surface of the first member 42. The bearings 53 are arranged at points conforming to the guiding profile 46 of the second member 45. The bearings 53 are distributed at least at every multiple of the wavelength of the guiding profile 46 such that at the point of maximum average separation between the opposing surfaces of the first and second members 42, 45, a bearing 53 is in contact with each maxima of the guiding profile 46. Therefore, the number of simultaneous contact points between the bearings 53 and the guiding profile 46 is equal to the number of maxima of the guiding profile 46. Increasing the number of simultaneous contact points increases stability and reduces wear on the bearings 53 and surfaces.

Increasing number of maxima therefore increases stability and reduces wear on the bearings 53 and surfaces. However, increasing the number of maxima on a single profile would require steeper inclined portions to achieve the same lift. More force would be required to lift the filter 10 if steeper inclined portions are used. Therefore, the use of multiple concentric profiles, such as for example use of inner and outer profiles 47, 48, increases number of maxima of the guiding profile 46 without increasing steepness of the inclined portions. Therefore, the use of the inner and outer profiles 47, 48 illustrated in the example of FIG. 4A, 4B, and 4C results in no substantial increase in force required to lift the filter 10 whilst improving stability and reducing wear on the bearings 53 and surfaces.

In some examples, one or more slots 43 are arranged about the circumference of the first member 42. In some examples the slots 43 may be provided by two substantially parallel projections 44 extending outwards from the outer edge of the first member 42. In some examples, these projections 44 are integral with the first member 42. In the example of FIG. 4C there are provided four slots 43, evenly distributed around the diameter of the first member 42. The slots 43 are sized to receive a vertically extending rail 51. The width of the rail 51 corresponds substantially to the width of the slot 43. The slot 43 is configured to enable movement up and down the rail 51 but prevent movement in some other direction. For example, the sides of the slot 43 abut against the sides of the rail 51 to prevent rotation of the first member 42 with respect to the vertically extending rail 51.

FIG. 4D illustrates an example of the third member 49 as shown in FIG. 4A. In some examples the third member 49, as described below, may be an integral portion of a housing 8 of the apparatus 1.

In some examples, the third member 49 is configured to provide a base of the means 4 for moving the filter 10. The third member 49 may, for example, provide a circular rail 50 upon which the second member 45 may be rotated. In some examples, the friction between this rail 50 and the lower surface of the second member 45 resists the rotation of the second member 45 with respect to the third member 49. Therefore, the relative position and orientation of the second and third members 45, 49 is maintained under the weight of the filter 10.

In some examples, the third member 49 also provides the vertically extending rails 51 which are configured to be received in the slots 43 arranged about the circumference of the first member 42. Therefore, the first member 42 and third member 49 are maintained in a fixed orientation. The second member 45 is rotated with respect to both to cause the first member 42 to slide up and down the vertically extending rails 51, increasing or decreasing the separation between the first member 42 and the third member 49. The filter abutment surface 41 is therefore raised or lowered with respect to the base of the means 4 for moving the filter 10.

In some examples, the third member 49 supports the means 6 for weighing the filter 10 in a fixed position relative to the third member 49. The third member 49 comprises a means for mounting the means 6 for weighing the filter 10. For example, the third member 49 comprises or is configured to receive a platform 52 at its centre upon which the means 6 for weighing the filter 10 is disposed. The height of the platform 52 is selected so that the level of the means 6 for weighing the filter 10 will be above at least the level of the filter abutment surface 41 when the first and third members 42, 49 have a minimum separation. Therefore, the complete weight of the filter can rest on the means 6 for weighing the filter 10 at least when the first and third members 42, 49 have a minimum separation. The height of the platform 52 is also selected so that the level of the means 6 for weighing the filter 10 will be below at least the level of the filter abutment surface 41 when the first and third members 42, 49 have a maximum separation. Therefore, the filter can be lifted off the means 6 for weighing the filter 10 at least when the first and third members 42, 49 have a maximum separation.

In some examples, the filter 10 is moved to the first position within the apparatus 1 when the first and third members 42, 49 have a maximum separation. In some examples, the filter 10 is moved to the second position within the apparatus 1 when the first and third members 42, 49 have a minimum separation. When the filter 10 is moved to the first position within the apparatus 1 or to the second position within the apparatus 1, it remains in that position without need of mechanical actuation or a braking system. For example, the friction between the second and third members 45, 49 prevents the second member 45 from rotating with respect to the third member 49 without the action of an external force in addition to that of the weight of the filter 10. Without the rotation of the second member 45, the separation of the first and third members 42, 49 does not change.

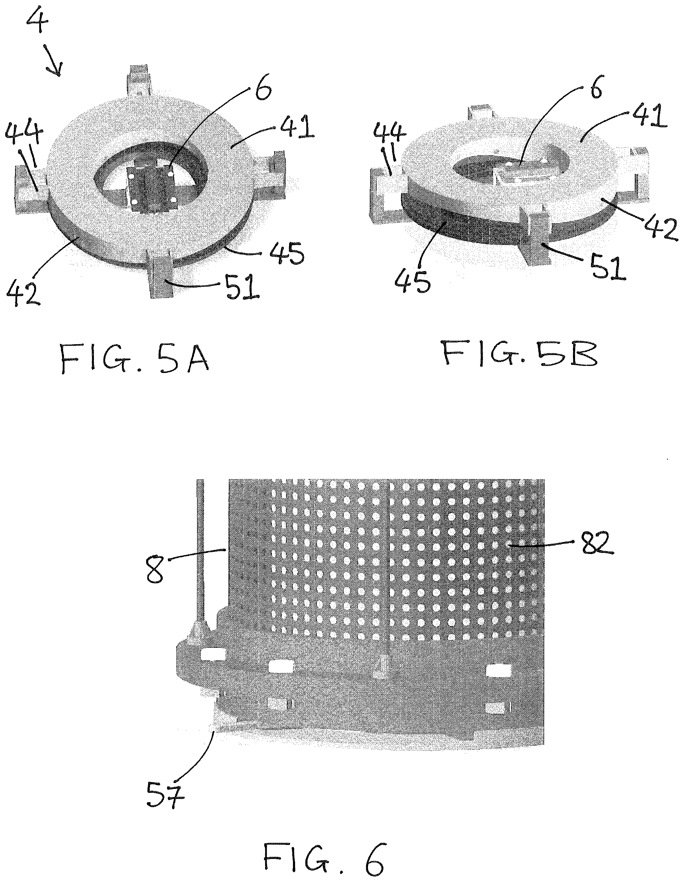

FIG 5A and 5B illustrate, in an assembled view, an example of a means 4 for moving the filter 10 according to the examples of FIG. 4A, 4B, 4C, and 4D.

FIG. 5A illustrates the means 4 for moving the filter 10 when the first and third members 42, 49 have a minimum separation. The level of the means 6 for weighing the filter 10 is above the level of the filter abutment surface 41. The slots 43 arranged about the circumference of the first member 42 receive a lower portion of the vertically extending rails 51.

FIG. 5B illustrates the means 4 for moving the filter 10 when the first and third members 42, 49 have a maximum separation. The level of the means 6 for weighing the filter 10 is below the level of the filter abutment surface 41. The slots 43 arranged about the circumference of the first member 42 receive an upper portion of the vertically extending rails 51.

In some examples the means 4 for moving the filter 10 is actuatable by a rotary actuator. The rotary actuator may comprise a motor. In some examples the means 4 for moving the filter 10 is actuatable by hand.

In the case of the former, the motor causes the rotation of the second member 45 with respect to the first and third members 42, 49. The motor can be placed inside a central space circumscribed by the first and second members 42, 45 or, if space within the apparatus 1 allows, between the housing 8 and the second member 45. If the motor is placed in the central space it may be controlled to provide a higher torque output than if it is placed outside of the apparatus 1.

In some examples where the means 4 for moving the filter 10 is actuatable by hand, a lever 57 is operationally coupled to the second member 45 and is operable by hand. The lever 57 and second member 45 may be connected by any number or combination of intervening elements (including no intervening elements). In some examples, such as in the example of FIG. 6, the lever 57 may be rotatable in the same direction as the second member 45 to cause rotation of the second member 45. The lever 57 may, for example, be integral with the second member 45.

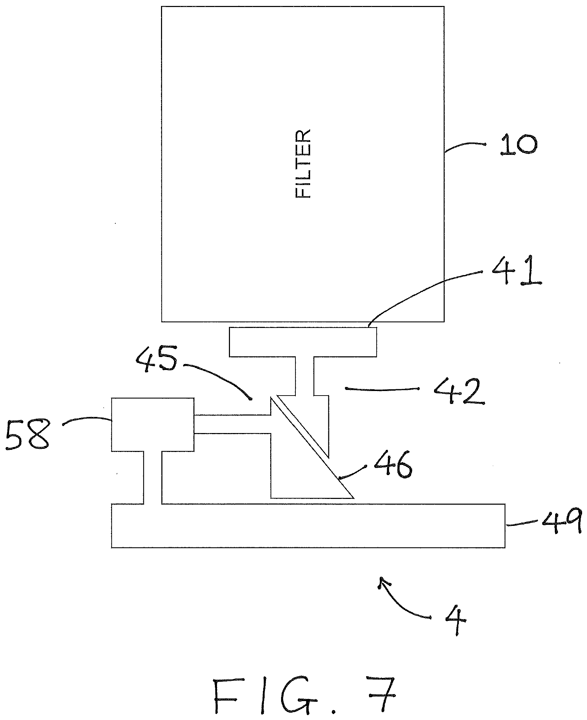

FIG. 7 schematically illustrates another example of the means 4 for moving the filter 10. In this example the means 4 for moving the filter 10 comprises means for raising and lowering a first member 42 with respect to a second member 45. The first member 42 has an upper surface configured to function as the filter abutment surface 41.

In the examples of FIG. 7, the raising and lowering of the first member 42 with respect to the second member 45 is achieved by converting horizontal movement of the second member 45 into vertical movement of the first member 42. The second member 45 comprises a guiding profile 46 having an inclined portion. In some examples the second member 45 comprises a wedge-shaped portion. The second member 45 is caused to move horizontally. The second member 45 may be caused to move horizontally under the urging of a linear actuator 58. In some examples the linear actuator 58 may be supported by a third member 49. The third member 49 may provide a base of the means 4 for moving the filter 10. The first member 42 may comprise an inclined surface opposing that of the second member 45. In some examples the first member 42 is constrained to movement in the vertical direction. As the second member 45 moves horizontally, the two inclined surfaces slide relative to each other causing vertical translation of the filter abutment surface 41.

As in the examples of FIG. 4A, 4B, 4C, and 4D, at least one bearing (not shown in FIG. 7) may be disposed between the opposing inclined surfaces of the first and second members 42, 45. The at least one bearing may be fixedly mounted to one of the first or second member 42, 45. The at least one bearing is in rolling contact with one or both of the opposing inclined surfaces.

FIG. 8 illustrates a method 100 according to examples of the disclosure. The method 100 comprises, at block 110, weighing a filter 10 within an apparatus 1, for example the apparatus 1 described above in relation to FIG. 1. At block 120, the filter is moved 120 between a first position within the apparatus 1 and a second position within the apparatus 1, wherein the first position enables calibration of means 6 for weighing the filter 10 and the second position enables weighing of the filter 10 by the means 6 for weighing the filter 10. In this manner an accurate reading of the weight of the filter 10 can be obtained.

In some examples, an output is obtained from the means 6 for weighing the filter 10 while the filter 10 is in the first position. This output is indicative of the zero point of the means 6 for weighing the filter 10 or the tare weight for the means 6 for weighing the filter 10. This output may enable calibration of the means 6 for weighing the filter 10. This output is transmitted towards a controller 19, 202.

In some examples, the output from the means 6 for weighing the filter 10 while the filter 10 is in the first position is provided substantially immediately before moving the filter 10 to the second position to enable weighing of the filter 10 by the means 6 for weighing the filter 10. In some examples, this output is provided a short time before the filter 10 is weighed. In this short time the ambient conditions will not significantly change. For example, the ambient temperature will not significantly change in the time between the provision of this output and the weighing of the filter 10. The period of time between taking a calibration reading using the means 6 for weighing the filter 10 and weighing the filter 10 using the means 6 for weighing the filter 10 is selected so as to miminise the probability of the ambient temperature changing by a threshold amount.

In other examples, the output from the means 6 for weighing the filter 10 while the filter 10 is in the first position is provided substantially immediately following weighing of the filter 10 in the second position. Therefore, the filter 10 is moved from the second position to the first position substantially immediately after the weighing of the filter 10. In other examples, this output is provided a short time after the filter 10 is weighed. In this short time the ambient conditions will not significantly change. For example, the ambient temperature will not significantly change in the time between the provision of this output and the weighing of the filter 10. The period of time between taking a calibration reading using the means 6 for weighing the filter 10 and weighing the filter 10 using the means 6 for weighing the filter 10 is selected so as to miminise the probability of the ambient temperature changing by a threshold amount.

In some examples, the means 6 for weighing the filter 10 may comprise a load sensor which exhibits some inelastic behaviour. In such examples, obtaining a calibration reading before weighing the filter may enable a more accurate calibration of the means 6 for weighing the filter 10 to be achieved. In other examples the effect of the inelastic behaviour of the load sensor on the accuracy of the calibration is negligible or not observed. In some examples the load sensor may not exhibit inelastic behaviour.

In some examples, the means 4 for moving the filter 10 is controlled to move the filter 10 from the first position to the second position within the selected period of time. In some examples, this involves controlling or preselecting the torque output of the motor which causes the rotation of a second member 45 as described in relation to FIG. 4B. In other examples, the guiding profile 46 may be designed, in view of a prescribed or constrained torque output of the motor, so as to enable the filter 10 to be moved from the first position to the second position within the selected period of time.

In some examples the weighing of the filter 10 is initiated upon detection that the filter 10 is in the second position. In some examples this may be determined using a mechanical contact sensor to detect when the filter 10 is resting on the means 6 for weighing the filter 10 or for detecting when the filter 10 is no longer resting on the filter abutment surface 41. In other examples, optical sensors may be used to determine the level of the filter abutment surface 41 or other indications as to the separation of the first and third members 42, 49 of the means 4 for moving the filter 10 such as the portion of the vertically extending rails 51 received in the slots 43 of the first member 42.

In some examples, the weight of the filter 10 may be compared against a known weight of the filter 10 when unused. In this way the saturation of the filter 10 may be determined.

In some examples, when a new filter is installed in an air purifier, its mass $m_0$ is measured and stored in a memory. The memory may be embedded in a controller 19, 202 comprised in the air purifier or in a remote device or server. In other examples, the mass of an unused filter $m_0$ may be known and written into computer program instructions (e.g., computer program instructions 210 as shown in FIG. 9) which control the processing of data obtained from the means 6 for weighing the filter 10.

In some examples, the filter 10 is weighed at a first time $t_i$ and an output indicative of the weight of the filter 10 at the first time $t_i$ is transmitted to the controller 19, 202. From this output, the mass of the filter $m_i$ at the first time $t_i$ is obtained. The mass of the unused filter $m_0$ is subtracted from the mass of the filter $m_i$ to give the mass of particulate matter $\Delta m_{raw\,i}$ captured since the installation of the filter:

$$\Delta m_{raw\,i} = m_i - m_0 \qquad (1)$$

In some examples, this mass $\Delta m_{raw\,i}$ is corrected for variations of humidity and temperature as between the weighing of the filter 10 at the first time $t_i$ and the conditions under which the mass of the unused filter $m_0$ was measured. At each weighing event, relative humidity RH and temperature T may also be measured. These values are used to calculate the correction $\delta m(T_i, RH_i, T_0, RH_0)$, either from a pre-established formula or a look-up table. The corrected mass of particulate matter captured since the installation of the filter is given by:

$$\Delta m_i = m_i - m_0 + \delta m(T_i, RH_i, T_0, RH_0) \qquad (2)$$

In some examples, the corrected mass of particulate matter captured since the installation of the filter $\Delta m_i$ is compared to a threshold value indicative of a mass of particulate matter which saturates the filter 10. An output to a user indicating that the filter 10 is saturated and/or should be replaced may be made in response to a determination that the corrected mass of particulate matter captured since the installation of the filter $\Delta m_i$ exceeds this threshold value. The output may be provided at the apparatus 1 and/or air purifier 3. For example, an LED on the outer casing may be controlled in order to provide an indication to the user and/or an audio output may be provided. In some examples, the air purifier 3 may comprise a display panel suitable for providing such information to the user. In other examples, the user may be notified by a notification at their mobile communications device.

In examples where the first position of the filter 10 also corresponds to the operational position of the filter 10, for example where the filter 10 is pressed into sealing contact with the housing 8 of the apparatus 1 and/or air purifier 3 in the first position, the filter 10 is moved from the second position to the first position once it has been weighed.

In some examples, the weighing of the filter 10 is repeated after a period of time such that a change in the weight of the filter 10 during this period of time can be determined. The change in the weight of the filter 10 may be used in determining the density of particulate matter suspended in air that passed through the filter 10 during this period of time.

In some example, the filter 10 is moved between the first and second positions within the apparatus 1 in order to enable calibration of the means 6 for weighing the filter 10 prior to this repetition of the weighing event.

In some examples, outputs indicative of the rotational speed of a fan 16 in an air purifier 3 in which the filter 10 is used, the power consumed by the fan 16, and the pressure on the intake-and exhaust-sides of the filter 10 may be used in order to determine the air flow rate Q(t) through the filter 10. The change in the weight of the filter 10 over a period of time and the air flow rate Q(t) through the filter 10 during the period of time may be used in determining the density of particulate matter suspended in air that passed through the filter 10 during this period of time.

In some examples, a model of air flow rate Q(t) against one or more of the rotational speed of a fan 16 in the air purifier 3 in which the filter 10 is used, the power consumed by the fan 16, and the pressure difference across the filter 10 is stored in a memory. The memory may be embedded in a controller 19, 202 comprised in the air purifier or in a remote device or server. The model may be stored as an equation or a look-up table. In some examples, the model may represent the relationship between three or more variables. The model may comprise a nomogram.

In some examples the air flow rate Q(t) at times between the first time $t_i$ and a second time $t_j$ is determined and stored in the memory. The air flow rate Q(t) may be determined and stored during this period of time or may be subsequently determined using the air flow rate model and data indicative of the rotational speed of the fan 16 in the air purifier 3 in which the filter 10 is used, the power consumed by the fan 16, and the pressure difference across the filter 10 that is received and stored during this period of time.

In other examples the airflow rate Q(t) may be held constant by controlling the rotational speed of the fan 16.

At the second time $t_j$ the weighing of the filter 10 is repeated and an output indicative of the weight of the filter 10 at the second time $t_j$ is transmitted to the controller 19, 202. From this output, the mass of filter $m_j$ at the second time $t_j$ is obtained. This mass may be processed as per equations (1) and (2) above to determine a corrected mass $\Delta m_j$ of particulate matter captured in the time between the installation of the filter and the second time $t_j$.

The density of particulate matter suspended in air that passed through the filter 10 during the period of time between the first time $t_i$ and a second time $t_j$, corresponding to the average exposure during this period of time, can therefore be obtained from the mass of particulate matter captured in the period of time between the first time $t_i$ and a second time $t_j$ divided by the volume of air that passes through the filter 10 during this period of time. For example, the average exposure during this period of time, can therefore be obtained by:

$$avg\ exposure_{ij} = \frac{\Delta m_j - \Delta m_i}{\int_{t_i}^{t_j} Q(t)dt} \qquad (3)$$

The average exposure may be compared to exposure limits in official air quality guidelines. An output to a user may be provided indicative of a result of this comparison. For example, an output may be provided to a user to warn them that the determined average exposure exceeds the exposure limits when such a result is obtained. The output may be provided at the apparatus 1 and/or air purifier 3. For example, an LED on the outer casing may be controlled in order to provide an indication to the user and/or an audio output may be provided. In some examples, the air purifier 3 may comprise a display panel suitable for providing such information to the user. In other examples, the user may be notified by a notification at their mobile communications device.

In some examples, the controller 19, 202 is configured to cause the apparatus 1 to perform periodic weighing of the filter 10. The controller 19, 202 may be configured to cause the apparatus 1 to weigh the filter 10 regularly. The controller 19, 202 may be configured to repeatedly cause the apparatus 1 to weigh the filter 10 after a fixed period of time has elapsed. In some examples, the weighing may occur every day, every week, or every two weeks. In some examples, a user may program the periodicity of the weighing events.

In examples in which the apparatus 1 is manually operated, such as the example of FIG. 6 where a lever 57 is used to cause the movement of a filter 10 between the first position within the apparatus 1 and the second position within the apparatus 1, an output to a user may be made to remind the user that a weighing event is due. The output may be provided at the apparatus 1 and/or air purifier 3. For example, an LED on the outer casing may be controlled in order to provide an indication to the user and/or an audio output may be provided. In some examples, the air purifier 3 may comprise a display panel suitable for providing such information to the user. In other examples, the user may be notified by a notification at their mobile communications device.

FIG. 9 schematically illustrates a system 200 according to examples of the disclosure. The system 200 comprising means for transmitting at least one signal to an apparatus 1 to cause weighing of a filter 10 within the apparatus 1; means for receiving at least one signal from the apparatus 1 indicative of the weight of the filter 10; means for transmitting at least one signal to an apparatus 1 to cause movement of the filter 10 between a first position within the apparatus 1 and a second position within the apparatus 1, wherein the first position enables calibration of means 6 for weighing the filter 10 and the second position enables weighing of the filter 10 by the means 6 for weighing the filter 10;

and means for determining a mass of particulate matter captured by the filter 10 over a first period of time based, at least in part, on the at least one signal from the apparatus 1 indicative of the weight of the filter 10.

In some examples, the first period of time may be the time since the filter 10 was received within the apparatus 1, thus enabling a saturation level of the filter 10 to be determined. In other examples, the first period of time may be the time between two weighing events, thus enabling the average exposure level during this period of time to be determined.

As illustrated, the system 200 comprises at least one transceiver 212. The at least one transceiver 212 may comprise any suitable means for receiving and/or transmitting information.

The information that is transmitted could comprise: at least one signal to cause weighing of a filter 10 within the apparatus 1; at least one signal to cause movement of the filter 10 between a first position within the apparatus 1 and a second position within the apparatus 1.

The at least one signal to cause movement of the filter 10 may comprise instructions to cause the motor powering the means for moving the filter 10 to output torque to cause the filter 10 to be moved between the first position within the apparatus 1 and the second position within the apparatus 1. The at least one signal to cause weighing of a filter 10 within the apparatus 1 may comprise instructions to cause the means 6 for weighing the filter 10 to take a reading and provide an output indicative of that reading.

The information that is received could comprise at least one signal indicative of an output from the means 6 for weighing the filter 10 such as at least one signal from the apparatus 1 indicative of the weight of the filter 10. The information received could also comprise at least one signal indicative of the zero point and/or tare weight of the means 6 for weighing the filter 10.

In some examples, the information that is received could also comprise: a signal indicative of the rotational speed of a fan 16 in an air purifier 3 in which the filter 10 is used; a signal indicative of the power consumed by the fan 16; a signal indicative of the pressure on the intake- and exhaust-sides of the filter 10; a signal indicative of relative humidity within the apparatus 1; a signal indicative of a temperature within the apparatus 1; etc.

The at least one transceiver 212 may comprise one or more transmitters and/or receivers. The at least one transceiver 212 may enable a wireless connection between the system 200 and the apparatus 1 of, for example, FIG. 1. The wireless connection could be a wireless connection such as a cellular connection, a WiFi connection, a Bluetooth connection or any other suitable type connection.

As illustrated, the system 200 comprises a controller 202. In the example of FIG. 9 the implementation of the controller 202 may be as controller circuitry. In some examples the controller 202 may be implemented in hardware alone, have certain aspects in software including firmware alone or can be a combination of hardware and software (including firmware).

As illustrated in FIG. 9 the controller 202 may be implemented using instructions that enable hardware functionality, for example, by using executable instructions of a computer program 208 in a general-purpose or special-purpose processor 204 that may be stored on a computer readable storage medium (disk, memory etc.) to be executed by such a processor 204.

The processor 204 is configured to read from and write to the memory 206. The processor 204 may also comprise an output interface via which data and/or commands are output by the processor 204 and an input interface via which data and/or commands are input to the processor 204.

The memory 206 is configured to store a computer program 208 comprising computer program instructions 210 (computer program code) that controls the operation of the system 200 when loaded into the processor 204. The computer program instructions 210, of the computer program 208, provide the logic and routines that enables the system 200 to cause performance of the method 100 illustrated in FIG. 8 and as described above. The computer program instructions 210, of the computer program 208, may provide the logic and routines that enables the system 200 to determine a density of particulate matter suspended in air that passed through the filter 10 during a first period of time based, at least in part, on the mass of particulate matter captured by the filter 10 over a first period of time. The processor 204 by reading the memory 206 is able to load and execute the computer program 208.

The system 200 therefore comprises at least one processor 204 and at least one memory 206 including computer program code 210. The at least one memory 206 and the computer program code 210 are configured to, with the at least one processor 204, cause the system 200 at least to perform the method 100 illustrated in FIG. 8 and as described above. For example, the at least one memory 206 and the computer program code 210 are configured to, with the at least one processor 204, cause the system 200 at least to cause: transmission of at least one signal to an apparatus 1 to cause weighing of a filter 10 within the apparatus 1; receipt of at least one signal from the apparatus 1 indicative of the weight of the filter 10; transmission of at least one signal to an apparatus 1 to cause movement of the filter 10 between a first position within the apparatus 1 and a second position within the apparatus 1, wherein the first position enables calibration of means 6 for weighing the filter 10 and the second position enables weighing of the filter 10 by the means 6 for weighing the filter 10; and determination of a mass of particulate matter captured by the filter 10 over a first period of time based, at least in part, on the at least one signal from the apparatus 1 indicative of the weight of the filter 10.

In some examples, the computer program 208 may arrive at the system 200 via any suitable delivery mechanism. The delivery mechanism may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 208. The delivery mechanism may be a signal configured to reliably transfer the computer program 208. The system 200 may propagate or transmit the computer program 208 as a computer data signal. In some examples the computer program 208 may be transmitted to the system 200 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 208 comprises computer program instructions 210 for causing a system 200 to perform methods such as the method 100 shown FIG. 8 and as described above.

The computer program instructions 210 may be comprised in a computer program 208, a non-transitory computer readable medium, a computer program product, a machine readable medium. In some but not necessarily all examples, the computer program instructions 210 may be distributed over more than one computer program 208.

Although the memory 206 is illustrated as a single component/circuitry it may be implemented as one or more separate components/circuitry some or all of which may be integrated/removable and/or may provide permanent/semi-permanent/ dynamic/cached storage.

Although the processor 204 is illustrated as a single component/circuitry it may be implemented as one or more separate components/circuitry some or all of which may be integrated/removable. The processor 204 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIG. 8 may represent steps in a method and/or sections of code in the computer program 208. The illustration of a particular order to the blocks does not necessarily imply that there is a required or preferred order for the blocks and the order and arrangement of the block may be varied. Furthermore, it may be possible for some blocks to be omitted. For example, the filter 10 may be weighed (block 110) prior to moving the filter 10 (block 120) from the second position to the first position to enable calibration of the means 6 for weighing the filter 10 or the filter 10 may be weighed (block 110) after moving the filter 10 (block 120) from the second position to the first position. In some examples, the calibration reading can be obtained before or after the weighing event provided it is obtained with a period of time which miminises the probability of the ambient temperature changing by a threshold amount.

In the foregoing description, where a structural feature has been described, it may be replaced by means for performing one or more of the functions of the structural feature whether that function or those functions are explicitly or implicitly described.

In some but not necessarily all examples, the apparatus 1 is configured to communicate data from the apparatus 1 with or without local storage of the data in a memory at the apparatus 1 and with or without local processing of the data by circuitry or processors at the apparatus 1. The data may be transmitted to the controller 202 via the transceiver 212.

The data may be stored in processed or unprocessed format remotely at one or more remote devices. For example, the data may be stored in processed or unprocessed format remotely at the memory 206 embedded in the controller 202 of a remote device. The data may be stored in a Cloud.

The data may be processed remotely at one or more remote devices. For example, the data may be processed by the controller 202 of a remote device. The data may be partially processed locally (at a controller comprised in the apparatus 1 and/or air purifier 3) and partially processed remotely at one or more remote devices.

The data may be communicated to the remote devices wirelessly via short range radio communications such as Wi-Fi or Bluetooth, for example, or over long range cellular radio links. The apparatus 1 may comprise a communications interface such as, for example, a radio transceiver for communication of data.

The storing of data may comprise only temporary storing, or it may comprise permanent storing or it may comprise both temporary storing and permanent storing, Temporary storing implies the storing of data temporarily. This may, for example, occur during sensing, occur at a dynamic memory, occur at a buffer such as a circular buffer, a register, a cache or similar. Permanent storing implies that the data is in the form of an addressable data structure that is retrievable from an addressable memory space and can therefore be stored and retrieved until deleted or over-written, although long-term storage may or may not occur.

As used in the foregoing description, the term 'module' refers to a unit or apparatus 1 that excludes certain parts/components that would be added by an end manufacturer or a user.

As used in the foregoing description, the term 'signal' refers to an electromagnetic signal encoding information.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims. Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature) or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1.  An apparatus comprising means for:

    receiving a filter;
    weighing the filter; and
    moving the filter between a first position within the apparatus and a second position within the apparatus, wherein the first position enables calibration of the means for weighing the filter and the second position enables weighing of the filter by the means for weighing the filter.

2.  An apparatus as claimed in claim 1, wherein the means for weighing the filter is configured to bear the weight of the filter when the filter is in the second position.

3.  An apparatus as claimed in claim 1 or 2, wherein the means for moving the filter is configured to bear the weight of the filter when the filter is in the first position such that a zero point for the means for weighing the filter can be established.

4.  An apparatus as claimed in any preceding claim, wherein the means for moving the filter comprises a filter abutment surface, and wherein the means for moving the filter is configured to raise the filter abutment surface from a position below the means for weighing the filter to a position above the means for weighing the filter to lift the filter off the means for weighing the filter, and is configured to lower the filter abutment surface from a position above the means for weighing the filter to a position below the means for weighing the filter to deposit the filter on the means for weighing the filter.

5.  An apparatus as claimed in claim 4, wherein the means for moving the filter comprises means for raising and lowering a first member with respect to a second member, the first member providing, on its upper surface, the filter abutment surface.

6.  An apparatus as claimed in claim 5, wherein the means for raising and lowering a first member with respect to a second member comprises means for converting rotational movement between first and second members about a vertical axis into axial movement between first and second members.

7.  An apparatus as claimed in claim 5 or claim 6, wherein at least one bearing is disposed between opposing surfaces of the first and second members and at least one of the opposing surfaces has a guiding profile for the at least one bearing, wherein the guiding profile comprises at least one inclined portion, and the at least one bearing is in rolling contact with the guiding surface.

8.  An apparatus as claimed in claim 7, wherein the means for raising and lowering a first member with respect to a second member is configured such that rotation of the first member with respect to the second member about the vertical axis causes the at least one bearing to move along the at least one inclined portion of the guiding profile so as to cause axial movement between the first and second parts such that the first member is raised or lowered with respect to the second member.

9.  An apparatus as claimed in any preceding claim, wherein the means for moving the filter is configured to position the filter in sealing contact with a housing of the apparatus when the filter is in the first position such that substantially all air flow paths between an at least one intake opening in the housing and an at least one exhaust opening in the housing pass through the filter.

10. An apparatus as claimed in any preceding claim, wherein the apparatus is an air purifier configured to reduce the density of particulate matter suspended in air that passes through the filter.

11. A method comprising:

weighing a filter within an apparatus; and
moving the filter between a first position within the apparatus and a second position within the apparatus, wherein the first position enables calibration of means for weighing the filter and the second position enables weighing of the filter by the means for weighing the filter.

12. A method as claimed in claim 11, comprising repeating weighing of the filter after a first period of time such that a change in the weight of the filter during the first period of time can be determined for use in determining the density of particulate matter suspended in air that passed through the filter during the first period of time.

13. A system comprising means for:

transmitting at least one signal to an apparatus to cause weighing of a filter within the apparatus;
receiving at least one signal from the apparatus indicative of the weight of the filter;
transmitting at least one signal to an apparatus to cause movement of the filter between a first position within the apparatus and a second position within the apparatus, wherein the first position enables calibration of means for weighing the filter and the second position enables weighing of the filter by the means for weighing the filter; and
determining a mass of particulate matter captured by the filter over a first period of time based, at least in part, on the at least one signal from the apparatus indicative of the weight of the filter.

14. A system as claimed in claim 13, wherein the first period of time is the time since the filter was received within the apparatus or wherein the first period of time is the time between two weighing events.

15. A system as claimed in claim 13 or 14, wherein the means are further configured to determine a density of particulate matter suspended in air that passed through the filter during a first period of time based, at least in part, on the mass of particulate matter captured by the filter over a first period of time.

FILTER RECEIVING
MEANS

FILTER MOVING
MEANS

FILTER WEIGHING
MEANS

1

2

4

6

FIG. 1

FIG. 2

FIG. 3A

FIG. 3B

FIG. 4A

FIG. 4C    FIG. 4B    FIG. 4D

FIG. 5A

FIG. 5B

FIG. 6

21

FILTER

10

41

45

42

58

46

49

4

FIG. 7

100

WEIGHING FILTER WITHIN
APPARATUS

110

MOVING FILTER WITHIN
APPARATUS

120

FIG. 8

FIG. 9

Europäisches
Patentamt

European
Patent Office

Office européen
des brevets

# EUROPEAN SEARCH REPORT

Application Number

EP 18 16 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/290193 A1 (WANG HSIU HSIEN [TW]) 2 October 2014 (2014-10-02) * abstract; claims 1-3,8; figure 1 * * paragraph [0029] * ----- | 1-12 | INV. G01G19/00 |

TECHNICAL FIELDS
SEARCHED (IPC)

G01G

~~The present search report has been drawn up for all claims~~

| Place of search | Date of completion of the search | Examiner |
|---|---|---|
| The Hague | 29 October 2018 | Katerbau, Ragnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

Application Number

EP 18 16 9688

The Search Division considers that the present European patent application does not comply with the requirements of unity of invention and relates to several inventions or groups of inventions, namely:

1. claims: 1-12

   An apparatus comprising means for receiving a filter and weighing the filter.
   ---

2. claims: 13-15

   A system comprising means for transmitting at least one signal to an apparatus to cause weighing of a filter for determining a mass of particulate matter captured by the filter.
   ---

## ANNEX TO THE EUROPEAN SEARCH REPORT
## ON EUROPEAN PATENT APPLICATION NO.

EP 18 16 9688

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2018

| Patent document cited in search report | Publication date | Patent family member(s) | Publication date |
|---|---|---|---|
| US 2014290193 A1 | 02-10-2014 | NONE | |

EPO FORM P0459

For more details about this annex : see Official Journal of the European Patent Office, No. 12/82